# EUROPEAN PATENT SPECIFICATION

(11) **EP 0 692 754 B1**
(45) Date of publication and mention of the grant of the patent: **20.06.2001**
(21) Application number: 95304842.8
(22) Date of filing: 11.07.1995
(51) Int. Cl.: G05B 19/18

(54) **Numerical control device**
Numerische Steuereinrichtung
Dispositif de commande numérique

(30) Priority: 15.07.1994 JP 18513594
(43) Date of publication of application: 17.01.1996
(73) Proprietor: FANUC LTD., Minamitsuru-gun, Yamanashi 401-05 (JP)
(72) Inventor: Kamiguchi, Masao, Yamanashi, 403-01 (JP); Ito, Masaya, Fussa-shi, Tokyo 197 (JP)
(74) Representative: Billington, Lawrence Emlyn

(56) References cited:
- EP-A- 0 160 099
- EP-A- 0 602 256

## Description

The present invention relates to a numerical control device.

Generally, a numerical control device. using a prepared processing program, drives and controls a drive mechanism such as a machine tool according to a processing command issued from the processing program.

The processing program is composed by a programmer in accordance with the contents of processing,and usually is stored in a memory means such as RAM. Then, the processing program is react out at the time of processing or execution.

With the numerical control device, it is usual that the programmer and the machine operator are different persons, so the machine operator does not always recognize sufficiently the programmer's intention in the program when using it. If the machine operator does not recognize sufficiently the intention of the designer of the processing program or the content of the processing program, the work load of machine operation increases and the working efficiency drops, or it may provoke misoperation depending on circumstances.

An example of a processing program of a wire electric discharge machine with a numerical control device is shown below.

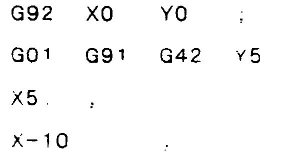

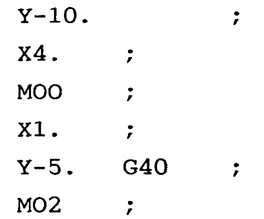

This is a program for processing a square column of 10 mm square, and it is set to stop temporarily by the "MOO" command at 1 mm before cutting off. Usually, the machine operator resumes processing after stopping by "MOO", and cuts off the workpiece. If left over in this stopped state, the machine operator may forget the reason of stopping of the machine, with the result that misoperation is unexpectedly induced. For example, the operator may remove the workpiece in spite of its semifinished state, may mistake it for a processing starting state, or may start a new operation or workpiece.

Hitherto, accordingly, it was considered to insert an annotation statement in the processing program in order to inform the machine operator of the intention of the programmer or of the content of the processing program.

During execution of the machine however, if the machine operator desires to know the processing state or the content of the processing program, the machine operator must take out the processing program to find out the corresponding processing block, and search the annotation statement. It hence takes time to understand the job content of the processing program. In the numerical control device, accordingly, this may give rise to misoperation of the work or lowering of the working efficiency.

EP-A-0602256 discloses a numerical control device according to the preamble of attached claim 1, wherein comments inserted into blocks of a user program are displayed for the duration of the respective blocks.

According to the present invention there is provided a numerical control device for controlling according to a processing program, comprising program interpretation means for reading the processing program to interpret the content thereof, and display means, wherein the program interpretation means is operable to recognize any existence in the processing program of a description concerning an annotation which explains the content of an associated execution command in the read processing program, the program interpretation means also being operable to issue a command to the display means to display the annotation, and the display means being operable to continue display of the annotation during execution of the associated execution command in the read processing program, characterised in that: when said description of the annotation in a read processing program is a symbol for specifying one of plural types of annotation prepared in advance, the program interpretation means is operable to judge the presence of such symbol in the program, and the display means is operable to display the annotation contents corresponding to the judged symbol.

An embodiment of the invention may reduce or solve the previously outlined problems, and may provide a numerical control device which makes it easy to understand the job procedure of a processing program.

The processing program interpretation means may sequentially read processing blocks of the processing program, and interpet the program, and may distinguish between execution command portions and other portions in the description of the processing program.

The execution command portions, interpreted by the interpretation means, may be outputted to the drive mechanism of a machine tool or the like to control it. Moreover, the processing program interpretation means, aside from outputting execution commands, also outputs display commands for displaying the contents of statements other than those of the execution commands to the display means. Then, the display means displays them according to the display command during execution of the processing program.

When the portion other than the execution command portion in the processing program is of an annotation statement, the display means may display the annotation statement. Or, when this portion is of a symbol other than an execution command, the symbol may be used as an address to read out the display content from the memory means, and the display content is displayed.

Thus in embodiments of the invention, although the processing program may not be understood, the execution state may be recognized, or the next job step may be understood, by reading an annotation statement displayed in the display device. If the processing is stopped, the annotation in that processing block may be displayed continuously in the display device during the stoppage of the processing, so that the cause of stopping may be easily identified.

For a better understanding of the invention and to show how it may be put into effect, reference will now be made, by way of example only, to the accompanying drawings, wherein:
Figure 1 is a block diagram of an embodiment of the invention,
Figure 2 is a flow chart for explaining the action of the embodiment of the invention;
Figure 3 and Figure 4 are diagrams for explaining the operation of the embodiment of the invention;

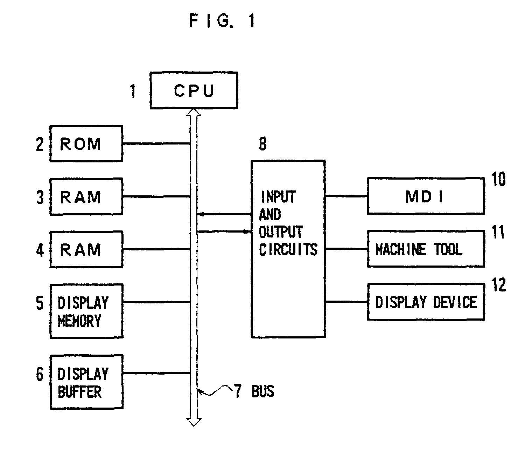

First, the constitution of an embodiment of the invention is described by referring to the block diagram of Fig. 1. Fig. 1 shows a block diagram of an embodiment for executing the invention. In Fig. 1, reference numeral 1 denotes a microprocessor (hereinafter referred to as CPU) for controlling the operation of a numerical control device, 2 is a ROM for storing control programs, 3 is a nonvolatile RAM for storing processing programs, processing conditions and various set values, 4 is a RAM used for provisional storing of data, 5 is a display memory storing the annotation display data of the processing program to be displayed in a display device 12, and 6 is a display buffer for temporarily storing the display data for display in the display device 12 during execution of a processing program. Besides, reference numeral 8 is an input and output circuit, which comprises a plurality of input terminals (circuits) and output terminals (circuits), and input and output wires of a manual data input device (hereinafter referred to as MDI) 10, machine tool 11, and display device 12 are connected to the corresponding terminals.

The ROM 2, RAMs3, 4, display memory 5, display buffer 6, and input and output circuits 8 are connected to the CPU 1 through buses 7.

As the display device 12, various display means such as a CRT or liquid crystal display device may be used, and it may be either built in the numerical control device itself, or provided separately from the numerical control device.

In the nonvolatile RAM 3, the processing programs, processing conditions, and various set values are stored, and the CPU 1 reads out these processing programs, processing conditions and various set values from the RAM 3, and executes them while utilizing the RAM 4.

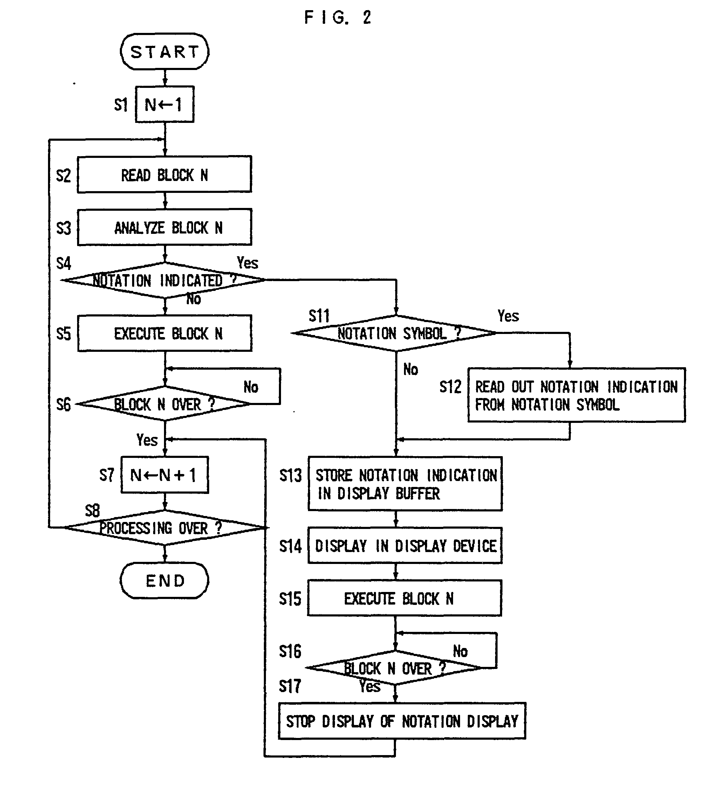

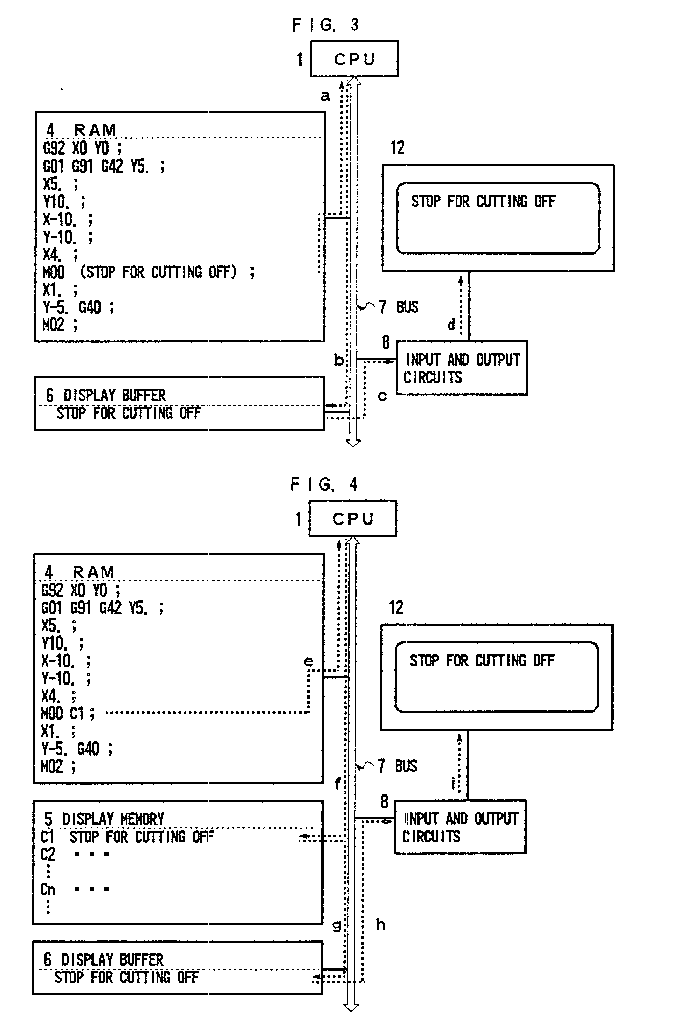

The action of the execution of the invention is described below referring to the flow chart of Fig. 2 and diagrams of Figs. 3 and 4.

In the flow chart of Fig. 2, the process indicated from step S1 to step S8 shows the ordinary machining process of the numerical control device, and the process from step S11 to S17 is the process for display of annotation. Herein, the display of annotation statement described in the processing program, and the display of display data stored in the display memory are collectively called annotation display.

The processing program to be executed by the numerical control device is explained using the following example.

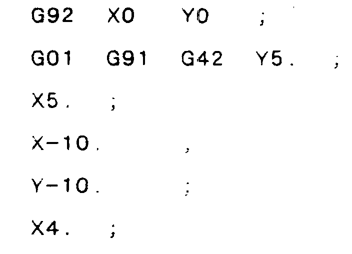

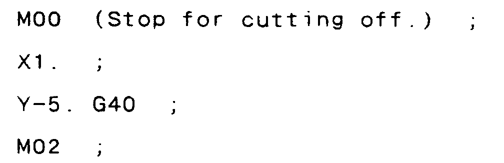

This processing program is for processing a square column of 10mm square, the same as the processing program shown above in the explanation of the related earlier example, and it is set to stop temporarily by the command of "MOO" 1 mm before cutting off. For displaying annotation with the display device in accordance with the invention, an annotation statement "Stop for cutting off" is inserted in the processing block of "MOO."

In this processing program, setting of index N is performed first for confirming the block in execution out of the processing blocks in the processing program, thus the value is set to "1" (step S1). The CPU 1 reads out the processing block N corresponding to the index N in the processing program from the ROM 2, and analyzes the processing block N (steps S2, S3). For example, the command "G01 Y5." in block 2 in the processing program is a move command for moving the wire by "5." in the Y-axis direction in the wire discharge cutting machine, and the CPU 1 reads this processing block, and analyzes the data of the move command.

Consequently, in the analysis of block N at step S3, it is judged whether there is any portion related to an annotation display in the block or not. When judged that the processing block N is related to an execution command of processing, machining is processed in the subsequent process of step S5 to step S8 On the other hand, when judged that the processing block N is of a command other than execution command of processing, processing of annotation display is performed in the following process from step S11 to step S17.

Block N is executed at step S5 to carry out the execution command of processing. The execution of this block N is same as processing of an ordinary numerical control device. After execution of block N (step S6), "1" is added to the index N (step S7), and the next processing block is executed similarly. The process is repeated by returning to step S2 until the processing program is over (step S8). The end of the processing program is judged at step S8. This judgment can be made, in the example of the above program, by searching presence or absence of execution command indicated by "M02" in the processing program.

The processing of annotation display at step S11 to step S17 is explained below.

In the judgement of annotation display at step S4, if there is any portion relating to annotation display in the processing block, it is first judgedif the portion relating to annotation display is an annotation statement or annotation symbol (step S11).

In this embodiment, one case of displaying the annotation according to the annotation statement mentioned in the processing program,and the other case of displaying the annotation statement according to a corresponding annotation symbol,are described below.

In the case of displaying annotation according to annotation statement, such displaying is made based on the statement "(Stop for cutting off)" described in block 7 in the aforementioned processing program. In this case, the portion enclosed by parentheses "( )" is the annotation statement to be displayed, and "Stop for cutting" in parentheses is the content to be displayed as it is.

In the case of displaying the annotation statement according to an annotation symbol, this block 7 is described as
MOO C1 ;
where "C1" is the annotation symbol. And, displaying of the annotation statement is made by reading out the content to be displayed which corresponds to "C1", stored in the display memory 5 The symbol "C" is a symbol indifferent to processing command, and different annotations are displayed according to the numerals attached to the symbol.

First, the case where judgement at step S11 is No is explained. In this case, it is judged that there is no annotation symbol but there is an annotation indication in the processing block N at step S11. Then, the annotation statement is stored in the display buffer 6 (step S13), and is displayed in the display device 12 through the input and output circuit 8 (step S14). This state is explained by referring to Fig. 3. Block 8 of the processing block, for example, in the processing program stored in the RAM 4 in Fig. 3 has an indication of the annotation "(Stop for cutting off)". The CPU 1 reads the processing block as indicated by broken line a, and analyzes and judges the annotation indication to discover the annotation statement, and stores this annotation statement in the display buffer 6 as indicated by broken line b. The display buffer 6 is provided for temporarily storing in order to continue the display of the annotation statement during execution of the processing block. The annotation statement is sent from the display buffer 6 to the display device 12 through input and output circuits 8 as indicated by broken lines c and d, and is displayed.

In a next case, the case where judgment at step S11 is Yes is explained. In this case it is judged that there is an annotation symbol in the processing block N. Then, the content of annotation to be displayed, which corresponds to the annotation symbol, is read out from the display memory 5 (step S12), is stored in the display buffer 6 (step S13), and is displayed in the display device 12 through the input and output circuits 8 (step S14). The process of steps S13 and S14 is same as in the case where the processing block N has the indication of an annotation statement This state is explained by referring to Fig. 4. The annotation symbol "C1" is indicated in the block 8 of the processing block, for example, in the processing program stored in the RAM 4 in Fig. 4. The CPU 1 reads the processing block as indicated by broken line e, analyzes and judges the annotation indication to discover the annotation symbol "C1," and sends to the display memory 5 using this annotation symbol "C1" as the address as indicated by broken line f. The content to be displayed "Stop for cutting off" corresponding to the annotation symbol "C1" is read out from the display memory 5 and is stored in the display buffer 6 as indicated by broken line g. The display buffer 6 is used for temporary storage for continuing display of the content while executing the processing block. The content to be displayed is sent out from the display buffer 6 into the display device 12 through the input and output circuits 8 as indicated by broken lines h and i, and is displayed.

CPU1, executing a display on the display device at step S14, also executes processing of block N (step S15) in the same manner as in the processing of the ordinary numerical control device. Displaying on the display device is stopped (step S17) after the end of execution of this block N (step S16), and process moves to step S7. Then, "1" is added to the index N (step S7), the next block is executed similarly, and the same process is repeated until the processing program is terminated.

In this way, displaying of the annotation on the display device is continued as long as processing of the processing block to which the annotation display is indicated is executed.

In general terms the invention provides a numerical control device for controlling according to a processing program, comprising processing program interpretation means 1 for interpreting the processing program, and display means 6, 12. The processing program interpretation means 1 interprets the processing program, and processes by an execution command obtained therefrom. It also distinguishes between the execution command and description other than the execution command in the processing program, and issues a display command according to a display other than the execution command. The display means 6, 12 displays during execution of the processing program according to the display command from the processing program interpretation means 1.

## Claims

1. A numerical control device for controlling according to a processing program, comprising program interpretation means for reading the processing program to interpret the content thereof, and display means,
wherein the program interpretation means is operable to recognize any existence in the processing program of a description concerning an annotation which explains the content of an associated execution command in the read processing program, the program interpretation means also being operable to issue a command to the display means to display the annotation, and
the display means being operable to continue display of the annotation during execution of the associated execution command in the read processing program;
characterised in that:
when said description of the annotation in a read processing program is a symbol for specifying one of plural types of annotation prepared in advance, the program interpretation means is operable to judge the presence of such symbol in the program, and the display means is operable to display the annotation contents corresponding to the judged symbol.

2. A numerical control device according to claim 1, wherein when said description of the annotation in a read processing program is a statement expressing the content of the annotation, the program interpretation means is operable to judge the presence of such statement in the program, and the display means is operable to display the annotation in the read processing program as it is described.

3. A numerical control device according to claim 1 or 2, wherein said plural types of annotation are stored in memory means, which uses the associated symbols as addresses.

## Patentansprüche

1. Numerische Steuereinrichtung zum Steuern in Übereinstimmung mit einem Verarbeitungsprogramm, die ein Programm-Interpretationsmittel zum Lesen des Verarbeitungsprogramms, um den Inhalt desselben zu interpretieren, und ein Anzeigemittel umfasst,
wobei das Programm-Interpretationsmittel betreibbar ist, um in dem Verarbeitungsprogramm das Vorhandensein irgendeiner Beschreibung betreffend eine Anmerkung, die den Inhalt eines zugeordneten Ausführungsbefehls in dem gelesenen Verarbeitungsprogramm erklärt, zu erkennen, welches Programm-Interpretationsmittel außerdem betreibbar ist, um einen Befehl an das Anzeigemittel zum Anzeigen der Anmerkung auszugeben, und
das Anzeigemittel betreibbar ist, um die Anzeige der Anmerkung während der Ausführung des zugeordneten Ausführungsbefehls in dem gelesenen Verarbeitungsprogramm fortzusetzen,
dadurch **gekennzeichnet**, dass
wenn die Beschreibung der Anmerkung in einem gelesenen Verarbeitungsprogramm ein Symbol zum genauen Angeben einer Vielzahl von Arten der Anmerkung ist, die vorab vorbereitet wurde, das Programm-Interpretationsmittel betreibbar ist, um über das Vorhandensein eines solchen Symbols in dem Programm zu urteilen, und das Anzeigemittel betreibbar ist, um die Anmerkungs-Inhalte entsprechend dem beurteilten Symbol anzuzeigen.

2. Numerische Steuereinrichtung nach Anspruch 1, wobei, wenn die Beschreibung der Anmerkung in einem gelesenen Verarbeitungsprogramm eine Anweisung ist, die den Inhalt der Anmerkung ausdrückt, das Programm-Interpretationsmittel betreibbar ist, um über das Vorhandensein einer solchen Anweisung in dem Programm zu urteilen, und das Anzeigemittel betreibbar ist, um die Anmerkung in dem gelesenen Verarbeitungsprogramm anzuzeigen, wie sie beschrieben ist.

3. Numerische Steuereinrichtung nach Anspruch 1 oder 2, wobei die Vielzahl von Arten der Anmerkung in einem Speichermittel gespeichert werden, das die zugeordneten Symbole als Adressen benutzt.

## Revendications

1. Dispositif de commande numérique pour exécuter des commandes en fonction d'un programme de traitement, comprenant un moyen d'interprétation de programme pour lire le programme de traitement dans le but d'interpréter son contenu, et un moyen d'affichage,
dans lequel, le moyen d'interprétation de programme peut être mis en marche pour reconnaître toute existence, dans le programme de traitement, d'une description concernant un commentaire qui explique le contenu d'une commande d'exécution associée dans le programme de traitement par lecture, le moyen d'interprétation de programme pouvant également être mis en marche pour envoyer une commande au moyen d'affichage dans le but d'afficher le commentaire, et
le moyen d'affichage peut être mis en marche pour poursuivre l'affichage du commentaire au cours de l'exécution de la commande d'exécution associée dans le programme de traitement par lecture;
caractérisé en ce que:
lorsque ladite description du commentaire dans un programme de traitement par lecture est un symbole pour spécifier un type parmi plusieurs types de commentaires préparés à l'avance, le moyen d'interprétation de programme peut être mis en marche pour évaluer la présence d'un tel symbole dans le programme, et le moyen d'affichage peut être mis en marche pour afficher le contenu du commentaire correspondant au symbole évalué.

2. Dispositif de commande numérique selon la revendication 1, dans lequel, lorsque ladite description du commentaire dans un programme de traitement par lecture est une instruction exprimant le contenu du commentaire, le moyen d'interprétation de programme peut être mis en marche pour évaluer la présence d'une telle instruction dans le programme, et le moyen d'affichage peut être mis en marche pour afficher le commentaire dans le programme de traitement par lecture à l'état tel que décrit.

3. Dispositif de commande numérique selon la revendication 1 ou 2, dans lequel lesdits plusieurs types de commentaires sont stockés dans un moyen de mémoire qui utilise les symboles associés comme adresses.
